# EUROPÄISCHE PATENTSCHRIFT

(11) **EP 1 297 880 B1**
(45) Veröffentlichungstag und Bekanntmachung des Hinweises auf die Patenterteilung: **25.05.2005**
(21) Anmeldenummer: 02102388.2
(22) Anmeldetag: 26.09.2002
(51) Int. Cl.: B01D 46/24, F02M 35/14

(54) **Luftfilter für Verbrennungsmotoren**
Air filter for internal combustion engines
Filtre à air pour moteur à combustion interne

(30) Priorität: 27.09.2001 DE 20115898 U
(43) Veröffentlichungstag der Anmeldung: 02.04.2003
(73) Patentinhaber: DONALDSON COMPANY, INC., Minneapolis, MN 55440 (US)
(72) Erfinder: Coulonvaux, Paul, 1200 Brüssel (BE); Delaunay Patrick, 50420 Domjean (FR)
(74) Vertreter: Eisenführ, Speiser & Partner

(56) Entgegenhaltungen:
- DE-A- 19 810 633
- US-A- 5 112 372

## Beschreibung

Die Erfindung betrifft einen Luftfilter für Verbrennungsmotoren, welcher ein aus einem Gehäusekörper und einem Gehäusedeckel bestehendes Filtergehäuse aufweist, welches eine Lufteinlassöffnung, eine Luftauslassöffnung und ein innerhalb des Filtergehäuses angeordnetes Filterelement aufweist, welches den Innenraum des Filtergehäuses in einen Einlass- und einen Auslassluftraum unterteilt.

Luftfilter der eingangs genannten Art sind im Stand der Technik bekannt. Dabei sind verschiedene Formen des Filtergehäuses gebräuchlich, unter anderem quaderförmige und zylinderförmige Filtergehäuse. Ebenso sind vielfältige Formen des Filterelements gebräuchlich, wie quaderförmige Filterelemente mit rechteckigem Querschnitt und zylinderförmige Filterelemente mit ringförmigem Querschnitt und viele andere. Solche Luftfilter sind regelmäßig im Ansaugtrakt von Verbrennungsmotoren angeordnet und haben die Aufgabe, die vom Verbrennungsmotor angesaugte Umgebungsluft zu reinigen.

Aus dem DE-A-198 10 633 ist ein Luftfilter für eine Brennkraftmaschine bekannt. Dieser besteht aus einem Gehäuse, einem Rohlufteinlass, einem Reinluftauslass sowie einem in dem Gehäuse angeordneten hohlzylindrischen Filterelement. In die hohlzylindrische Öffnung des Filterelements erstreckt sich ein Diffusor um die Pulsationsschwingungen der Ansaugluft zu reduzieren.

Bei der Ansaugung der Umgebungsluft durch den Verbrennungsmotor entstehen insbesondere durch die Bewegung der Ventile im Ansaugtrakt und in den Zylindern der Motoren Ansauggeräusche.

Diese Ansauggeräusche werden einerseits durch indirekte Schallabstrahlung über die Gehäuseteile des Verbrennungsmotors und des Ansaugtrakts abgestrahlt. Der größte Teil der Schallenergie der Ansauggeräusche wird jedoch mittels direkter Schallleitung durch die im Ansaugtrakt und im Luftfilter befindliche Luft in die Umgebung emittiert. Diese Schallenergie kann einen beträchtlichen Anteil des insgesamt von dem Verbrennungsmotor emittierten Schalls ausmachen. Umweltschutz und sich regelmäßig verschärfende Lärmvorschriften für Verbrennungsmotoren erfordern daher Maßnahmen zur Reduktion der emittierten Schallenergie des Ansauggeräusches.

Zwar wird durch die Luftführung innerhalb des Filtergehäuses und durch das Luftfilterelement hindurch die Energie der entgegen der Luftströmungsrichtung laufenden Schallwellen im Ansaugtrakt geringfügig reduziert, jedoch sind für eine wirkungsvolle Dämpfung der Ansauggeräusche weitere Maßnahmen erforderlich. Bei diesen Maßnahmen sind die regelmäßig beengten Platzverhältnisse des Verbrennungsmotors in bestimmten Einbausituationen zu berücksichtigen.

Aufgabe der Erfindung ist es daher, eine Vorrichtung bereitzustellen, welche bei geringem Platzbedarf die Ansauggeräusche von Verbrennungsmotoren reduziert.

Die Aufgabe wird durch einen im Ansaugtakt eines Verbrennungsmotors angeordneten Luftfilter gelöst, welcher gemäß Anspruch 1 innerhalb des Luftfiltergehäuses verschiedene, zusammenwirkende Elemente zur Reduktion der Schallenergie des Ansauggeräusches aufweist.

Der erfindungsgemäße Luftfilter umfasst ein Filtergehäuse, welches aus einem Gehäusekörper und einem Gehäusedeckel besteht und in seinem Inneren ein Filterelement aufnimmt. Im Filtergehäuse befinden sich eine Lufteinlassöffnung, durch welche die aus der Umgebung angesaugte Luft in das Luftfiltergehäuse eintreten kann und eine Luftauslassöffnung, durch welche die im Luftfilter gereinigte Luft das Luftfiltergehäuse in Richtung des Verbrennungsmotors verlassen kann. Das Luftfilterelement teilt das Filtergehäuse in einen Einlassluftraum, welcher aus einem durch die Lufteinlassöffnung belüfteten Einlasslufteingangsabschnitt und einem Einlassluftsammelabschnitt besteht und einen Auslassluftraum, welcher durch die Luftauslassöffnung entlüftet wird.

Im Einlassluftraum ist ein erster Satz Röhren angeordnet, welche den Einlasslufteingangsabschnitt mit dem Einlassluftsammelabschnitt verbinden und durch welche die gesamte, den Filter durchströmende Luft geleitet wird. Nachdem die Luft den im Einlassluftraum befindlichen ersten Satz Röhren passiert hat, wird sie durch das Filterelement geleitet und in üblicher Weise gereinigt. Das Filterelement kann, wie oben ausgeführt, verschiedene Formgebungen aufweisen. Übliche Filterelemente bestehen regelmäßig aus einem mehrfach gefalteten Papiermedium, welches Poren mit einem bestimmten Durchmesser oder innerhalb eines bestimmten Durchmesserbereichs aufweist.

Nachdem die Luft das Luftfilterelement passiert hat, wird sie in einen speziell geformten Kanal geleitet. Dieser Kanal ist als Venturi-Düse geformt, deren Engstelle in Luftströmungsrichtung nach einer steilen Querschnittsverengung des Kanals nahe dem Lufteintrittsort des Kanals liegt. Hinter der engsten Stelle erweitert sich der Kanal bis auf seinen ursprünglichen Querschnitt in einem flachen Verlauf. Der Kanal unterteilt den Auslassluftraum in einen Auslassluftsammelabschnitt und einen Kanalabschnitt und leitet die gesamte den Filter durchströmende Luft zur Luftauslassöffnung, wo sie das Filtergehäuse verlässt und durch Kanäle des Ansaugtrakts zum Verbrennungsmotor geleitet wird.

Bei einer vorteilhaften Ausführungsform der Erfindung wird die Luft nach Durchtritt durch das Filterelement in einem Rohrabschnitt des Kanals gesammelt, in den sie durch eine Vielzahl von Durchbrüchen, vorzugsweise quadratischen Durchbrüchen, in der Umfangswand des Rohrabschnitts eintreten kann. Aus diesem Rohrabschnitt wird die Luft in axialer Richtung in den als Venturi-Düse geformten Kanalabschnitt geleitet.

Eine Ausführungsform der Erfindung sieht vor, dass die Luft nach Durchtritt durch den als Venturi-Düse geformten Kanal durch radiale Durchbrüche in einem als Rohrabschnitt ausgebildeten Kanalteil zur Luftaustrittsöffnung strömt.

Bei einer anderen vorteilhaften Ausführungsform der Erfindung ist im Auslassluftraum ein zweiter Satz Röhren angeordnet, welche den Auslassluftraum in einen Auslassluftvorröhrenabschnitt und einen Auslassluftausgangsabschnitt unterteilen. Durch diesen zweiten Satz Röhren tritt die durch den Kanalabschnitt strömende Luft hindurch und wird zur Luftauslassöffnung geleitet.

Eine weitere Ausbildungsform der Erfindung sieht vor, dass das Filtergehäuse und das Filterelement eine Zylinderform aufweisen. Hierbei kann der als Venturi-Düse ausgebildete Kanal und die im Einlassluftraum angeordneten Röhren achsparallel zur Mittelachse des Filterelements ausgerichtet sein.

Eine weitere Ausbildungsform der Erfindung sieht vor, dass der erste Satz Röhren auf der Lufteinlassseite der Röhren an einem tellerförmig ausgebildeten Tragkörper befestigt sind, der den Durchtritt von zu reinigender Luft zum Filterelement bis auf den Durchtrittsquerschnitt aller Röhren des ersten Satzes sperrt. Vorzugsweise kann der Tragkörper eine mittig ausgebildete Auswölbung aufweisen, welche zum Einlasslufteingangsabschnitt ausgeformt ist.

Schließlich kann bei einem für einen bestimmten Verbrennungsmotor verwendeten Luftfilter die Anzahl, die Länge und der Durchmesser der Röhren des ersten und/oder des zweiten Satzes Röhren in Abhängigkeit der Schallcharakteristik des Verbrennungsmotors festgelegt werden, um dadurch eine optimale Geräuschminimierung der Ansauggeräusche des Verbrennungsmotors zu erreichen.

Das dem Aufbau des erfindungsgemäßen Luftfilters zugrunde liegende Verfahren zum Reduzieren der Ansauggeräusche von Verbrennungsmotoren besteht darin, dass die Schallwellen, welche entgegen der Luftströmungsrichtung durch die Luftauslassöffnung in das Filtergehäuse gelangen, zunächst den als Venturi-Düse ausgebildeten Kanal durchlaufen und dabei in dem sich allmählich verengenden Querschnitt des Kanals an den Wänden des Kanals reflektiert und komprimiert werden. Nach Durchlaufen der engsten Stelle des Kanals verlieren die solcher Art verdichtenden Schallwellen durch die abrupte Querschnittserweiterung des Kanals an Schallenergie und gelangen hiernach in den optional vorgesehenen Rohrabschnitt des Kanals. Aus diesem Rohrabschnitt werden die Schallwellen durch eine Richtungsumkehr, beispielsweise von nicht weniger als 90°, durch die Durchbrüche in der Umfangswand des Rohrabschnitts herausgeleitet, wodurch eine weitere Verringerung der Schallenergie erreicht wird. Hiernach werden die Schallwellen durch das Luftfilterelement geleitet und erfahren hierbei die bekannte, geringfügige Dämpfung, welche auch in Luftfiltern nach Stand der Technik erreicht wird. Nach Durchtritt durch das Filterelement treten die Schallwellen in die Röhren des ersten Röhrensatzes ein, welche vorteilhafter Weise nach Anspruch 4 so angeordnet sind, dass eine weitere Richtungsumkehr der Schallwellen, z.B. um nicht weniger als 90°, hierbei erfolgt. Bei Durchlauf des ersten Satzes Röhren, welche sich in Durchlaufrichtung der Schallwellen leicht konisch erweitern können, verlieren die Schallwellen weiter an Energie. Die solcher Art gedämpften Schallwellen gelangen nach Austritt aus dem ersten Satz Röhren zur Lufteinlassöffnung, welche vorteilhafterweise so angeordnet sein kann, dass eine erneute Richtungsänderung der Schallwellen beim Austritt durch die Lufteinlassöffnung in Bezug auf die Durchlaufrichtung der Röhren erfolgt.

Gehäusekörper und -deckel sowie die im Gehäuseinnenraum angeordneten Bauelemente sind vorteilhafterweise aus einem steifen und schwingungsarmen Werkstoff, vorzugsweise einem Kunststoff, hergestellt. Hierdurch wird die Schallabstrahlung des Ansauggeräusches über Aussenflächen des Luftfilters und die Wirkung des Luftfilters selbst als Resonanzkörper verringert. Darüber hinaus kann das Luftfiltergehäuse, ebenso wie andere Bauelemente des Luftfilters, durch Rippen derart verstärkt werden, dass die Steifigkeit erhöht und größere Resonanzflächen vermieden werden.

Mit dem Ziel einer rationellen Fertigung ist vorgesehen, sämtliche Bauteile des Filters, mit Ausnahme des Filterelements selbst, mittels eines thermoplastischen Urformverfahrens, wie z.B. eines Spritzgussverfahrens oder eines Thermoformverfahrens, herzustellen.

Die bevorzugte Ausführungsform der Erfindung wird anhand der Zeichnungen beschrieben. Es zeigen:
- Fig. 1: eine teilgeschnittene Längsansicht des Filters;
- Fig. 2: eine perspektivische Explosionsdarstellung des Filters.
- Fig. 3: eine teilgeschnittene Längsansicht einer alternativen Ausführungsform des Filters;
- Fig.4: eine perspektivische Explosionsdarstellung einer alternativen Ausführungsform des Filters.

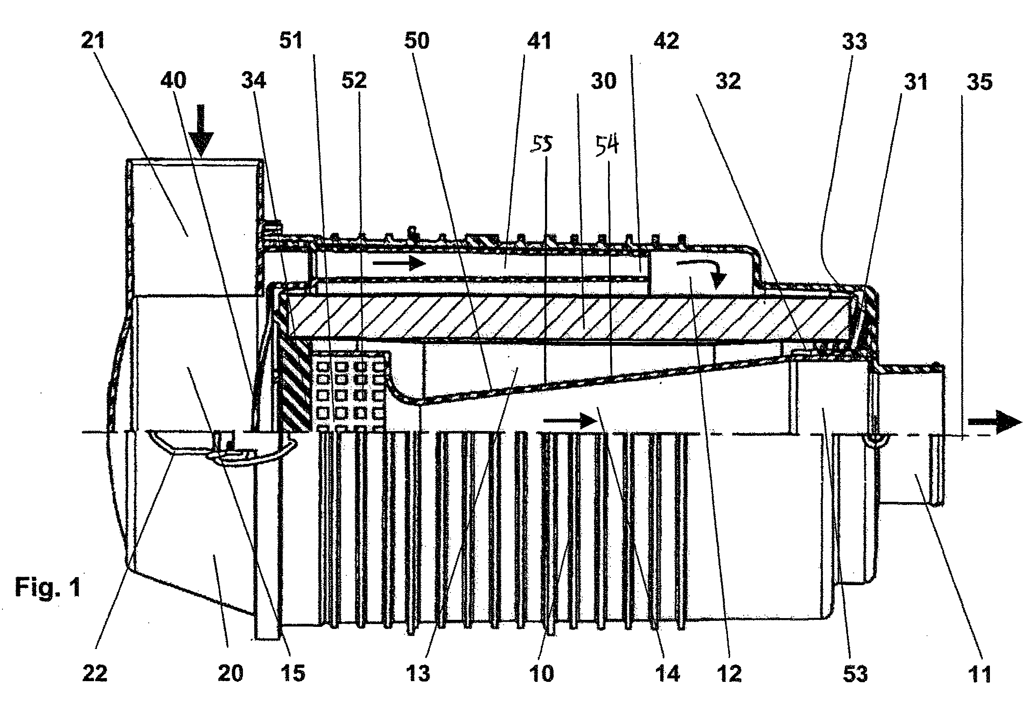

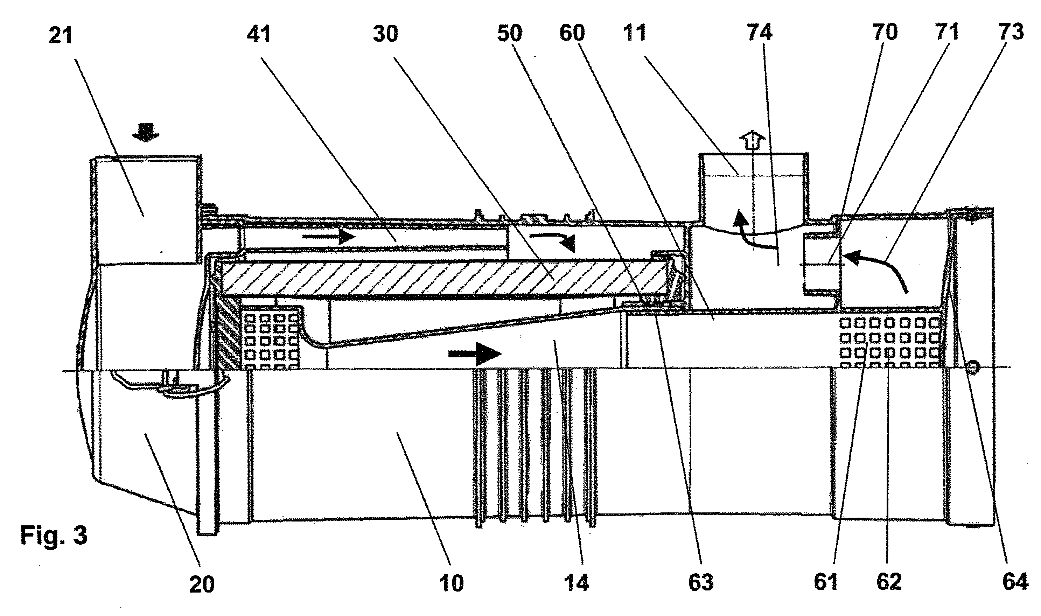

Die Luftströmungsrichtung ist in Fig. 1 und 3 durch Pfeile gekennzeichnet.

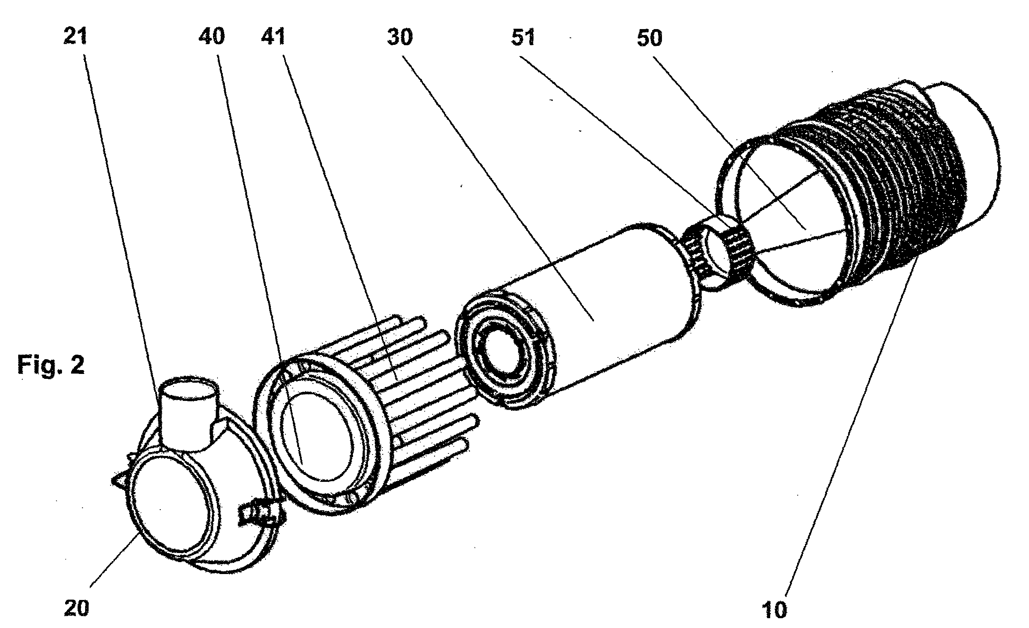

Bei der in Fig. 1 und 2 dargestellten Ausführungsform der Erfindung ist an einem zylindrischen Gehäusekörper 10 mit Luftauslassöffnung 11 ein Gehäusedeckel 20 mit Lufteinlassöffnung 21 mittels üblicher Befestigungsklammern 22 lösbar befestigt. Ein zylindrisches Filterelement 30 liegt koaxial zur Längsachse 35 des Gehäusekörpers innerhalb des Filtergehäuses und teilt den Innenraum des Filtergehäuses in einen Einlassluftraum 12, 15 und einen Auslassluftraum 13, 14 auf. Auf seiner einen, der Luftauslassöffnung 11 zugewandten Seite liegt das Filterelement 30 mit- tels einer elastischen, ringförmigen Radialdichtung 31 an einem sich ins Gehäuseinnere erstreckenden Stutzen 32 an. An seinem anderen Ende ist das Filterelement 30 mit einer elastischen, scheibenförmigen Endkappe 34 versehen, so dass an diesem Ende keine Luft in axialer Richtung in das Innere des Filterelements eintreten kann. Die elastische Endkappe 34 stützt sich mittels einer ringförmigen Erhebung axial an einem tellerförmigen Tragkörper 40 ab.

Der Tragkörper 40 ist rotationssymmetrisch um die Längsachse 35 angeordnet. Er weist einen größeren Durchmesser auf als das Filterelement 30 und unterteilt den Einlassluftraum in einen Einlasslufteingangsabschnitt 15 und einen Einlassluftsammelabschnitt 12. Mit dem Tragkörper 40 ist ein erster Satz mehrerer parallel zueinander stehender und kreisförmig angeordneter Röhren 41 im äußeren Bereich der zur Auslassöffnung weisenden Seite des Tragkörpers verbunden. Die Röhren des ersten Satzes Röhren 41 liegen achsparallel zur Längsachse 35 außerhalb des Filterelements 30. Sie laufen, ausgehend von ihrem am Tragkörper 40 befestigten Ende, zu ihrem freistehenden Ende 42 konisch zu. Der tellerförmige Tragkörper 40 stützt sich in seinem äußersten Bereich axial am Gehäusedekel 20 ab. Der Tragkörper weist in seinem inneren Durchmesserbereich eine Wölbung auf, die in Richtung des Einlasslufteingangsabschnitts 15 ausgeformt ist.

Durch die Befestigung des Gehäusedeckels 20 auf dem Gehäusekörper 10 mittels der üblichen Befestigungsklammern 22 werden die axialen Auflageflächen des Gehäusedeckels gegen den Tragkörper 40, des Tragkörpers 40 gegen die elastische Endkappe 34, des Filterelements 30 gegen die elastische Endkappe 34 und das ringförmige Dichtelement 31 und des ringförmigen Dichtelements 31 gegen die innere Gehäusekörperstirnseite 33 gepresst. So wird eine Fixierung des Filterelements und des Tragkörpers mit den daran angegossenen Röhren innerhalb des Filtergehäuses erreicht.

Innerhalb des zylindrischen Filterelements 30 ist ein als Venturi-Düse ausgeformter Kanal 50 angeordnet, welcher den Auslassluftraum in einen Auslassluftsammelabschnitt 13 und einen Kanalabschnitt 14 unterteilt. Der Kanal 50 weist an seinem der Lufteintrittsöffnung zugewandten Ende einen ersten Rohrabschnitt 51 auf, welcher sich axial auf der elastischen Endkappe 34 abstützt. Der erste Rohrabschnitt 51 weist in seiner Umfangsfläche eine Vielzahl von quadratischen Durchbrüchen 52 auf. Der erste Rohrabschnitt nimmt etwa 1/8 der Gesamtlänge des Kanals ein. Anschließend an diesen ersten Rohrabschnitt verengt sich der Kanal über eine Länge von etwa 1/8 seiner Gesamtlänge durch einen nach innen konvexen, bogenförmigen Verlauf seiner Wandung auf etwa 1/3 seines Durchmessers und erweitert sich unmittelbar nach seiner engsten Stelle über eine Länge von etwa 5/8 seiner Gesamtlänge wieder auf den ursprünglichen Durchmesser. Hieran anschließend weist der Kanal 50 im Bereich vor der Auslassöffnung 11 einen kurzen zweiten rohrförmigen Abschnitt 53 auf, welcher etwa 1/8 seiner Gesamtlänge einnimmt. Mit diesem zweiten Rohrabschnitt stützt sich der Kanal 50 an seiner der Luftauslassöffnung zugewandten Seite radial innerhalb des am Gehäusekörper 10 angegossenen Stutzten 32 ab.

Die den Filter durchströmende Luft tritt über die radiale Lufteinlassöffnung 21 ein und wird über die zum Einlasslufteingangsabschnitt 15 weisende ausgewölbte Fläche des Tragkörpers 40 in axialer Richtung umgelenkt und zu den im Tragkörper 40 befestigten Enden der Röhren des ersten Röhrensatzes 41 geleitet. Die Luft passiert den ersten Satz Röhren 41 und tritt an deren freien Enden 42 aus. Hiernach wird sie um nicht weniger als 90° umgelenkt und durchströmt das Filterelement 30 in radialer Richtung. Im Luftauslassraum strömt die Luft in Richtung der Endkappe 34 des Filterelements und tritt in radialer Richtung durch die Durchbrüche 52 im ersten Rohrabschnitt 51 in das Innere des Rohrabschnitts ein. Die Luft wird erneut in Axialrichtung umgelenkt und durchströmt den als Venturi-Düse geformten Kanal 50 in Richtung der Luftauslassöffnung 11 und verlässt den Filter an der Luftauslassöffnung 11.

Vom Verbrennungsmotor 11 emittierte Schallwellen durchlaufen den Luftfilter in entgegengesetzter Richtung der Luftströmung und werden, ebenso wie diese, hierbei mehrfach umgelenkt. Sie treten in die Luftauslassöffnung 11 in den Luftfilter ein und werden durch Reflexionen an den trichterförmig in Richtung des Rohrabschnitts 51 ausgebildeten Wänden des Kanals 50 und durch die abrupte Querschnittserweiterung des Kanals 50 kurz vor dem zweiten Rohrabschnitt 51 gedämpft. Die gedämpften Schallwellen durchdringen das Filterelement 30, treten am freien Ende 42 in die Röhren des ersten Röhrensatzes 41 ein und durchlaufen diese Röhren in Richtung auf die Lufteintrittsöffnung. Hierdurch verlieren die Schallwellen weiter an Schallenergie. Die solcher Art gedämpften Schallwellen geringer Intensität verlassen den Luftfilter durch die Lufteintrittsöffnung 21.

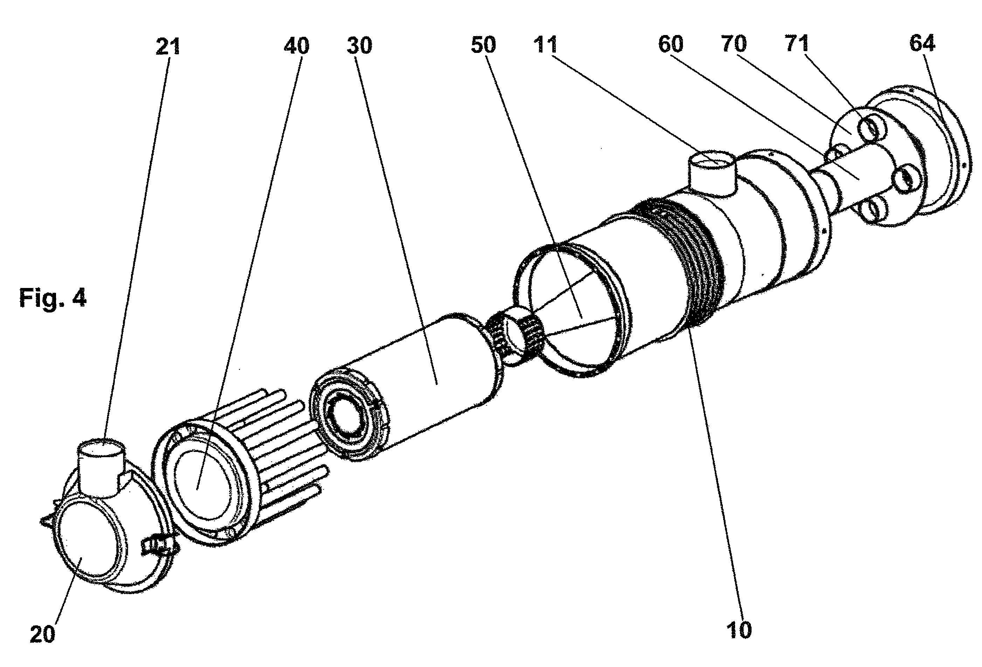

Bezug nehmend nun zu Fig. 3 und 4 ist der Kanal 50 bei einer alternativen Ausführungsform der Erfindung durch ein Rohrstück 60 in axialer Richtung verlängert. Das Rohrstück 60 stützt sich mit einem ersten Rohrstückabschnitt 63 radial im zweiten Rohrabschnitt 53 des Kanals 50 ab. An seinem dem Kanal 50 abgewandten Ende weist das Rohrstück 60 einen zweiten Rohrstückabschnitt 61 auf, welcher mit einer Vielzahl von quadratischen Durchbrüchen 62 in radialer Richtung versehen ist. Das Rohrstück 60 ist einstückig mit einer Rohrstückendkappe 64 versehen, welche das Rohrstück 60 in axialer Richtung auf der dem Kanal abgewandten Seite verschließt. Die Rohrstückendkappe 64 stützt sich radial an der Innenwand des Filtergehäuses 10 ab.

Das Rohrstück 60 trennt den Kanalabschnitt des Auslassluftraums von einem weiteren, ebenfalls zum Auslassluftraum gehörenden Abschnitt, welcher um das Rohrstück 60 herum angeordnet ist, ab. Dieser Abschnitt wird durch einen scheibenförmigen Ring 70 in einen Auslassluftvorröhrenabschnitt 73 und einen Auslassluftausgangsabschnitt 74 unterteilt. Der scheibenförmige Ring 70 weist einen zweiten Satz Röhren 71 auf, welche sich in Richtung der Luftauslassöffnung 11 erstrecken und den Auslassluftvorröhrenabschnitt 73 mit dem Auslassluftausgangsabschnitt 74 verbinden. Dieser zweite Satz Röhren 71 liegt parallel zu dem ersten Satz Röhren 41 und ist ebenso wie dieser konzentrisch um die Mittelachse 35 angeordnet. Die Röhren des zweiten Satzes 71 sind kürzer und weisen einen größeren Durchmesser als die Röhren des ersten Satzes 41 auf. Die Anzahl der Röhren des zweiten Satzes ist geringer als diejenige des ersten Satzes. Der scheibenförmige Ring 70 ist an der äußeren Oberfläche der Wandung des Kanals 60 unmittelbar benachbart zum zweiten Rohrstückabschnitt 61 befestigt. An seinem äußeren Umfang stützt sich der scheibenförmige Ring 70 an der Wand des Gehäusekörpers 10 ab.

Die Luftauslassöffnung 11 ist bei der alternativen Ausführungsform des Luftfilters in radialer Richtung in den Gehäusekörper 10 eingesetzt und entlüftet den Auslassluftausgangsabschnitt 74.

Bei der alternativen Ausführungsform des Luftfilters durchströmt die Luft in gleicher Weise wie bei der zuvor beschriebenen Ausführungsform den Einlasslufteingangsabschnitt 15, den ersten Satz Röhren 41, das Filterelement 30, die Durchbrüche 52 und den als Venturi-Düse geformten Kanal 50. Aus dem Kanal 50 strömt die Luft in axialer Richtung in das Rohrstück 60 und wird aus diesem Rohrstück 60 durch die Durchbrüche 62 in radialer Richtung herausgeleitet und hierbei entsprechend umgelenkt. Die Luft sammelt sich im Auslassluftvorröhrenabschnitt 73 und wird in axialer Richtung durch den zweiten Satz Röhren 71 in den Auslassluftausgangsabschnitt 74 geleitet. Hierbei strömt die Luft entgegensetzt zu der Richtung, durch die sie den als Venturi-Düse geformten Kanal 50 durchströmte. Aus dem Auslassluftausgangsabschnitt 74 wird die Luft unter erneuter Umlenkung um nicht weniger als 90° durch die radial angeordnete Luftauslassöffnung 11 aus dem Filtergehäuse herausgeführt.

Die vom Verbrennungsmotor 11 emittierten Schallwellen werden durch die zusätzliche Umlenkung im Auslassluftausgangsabschnitt 74, im Auslassluftvorröhrenabschnitt 73 und im zweiten Rohrstückabschnitt 62 sowie durch die Passage der Röhren 71 zusätzlich gedämpft.

## Patentansprüche

1. Luftfilter für Verbrennungsmotoren, umfassend
- ein aus einem Gehäusekörper (10) und einem Gehäusedeckel (20) bestehendes Filtergehäuse mit einer Lufteinlassöffnung (21) und einer Luftauslassöffnung (11),
- ein Filterelement (30), welches innerhalb des Filtergehäuses angeordnet ist, dieses in einen aus einen Einlasslufteingangsabschnitt (15) und Einlassluftsammelabschnitt (12) bestehenden Einlassluftraum und einen Auslassluftraum (13, 14) aufteilt,
- ein im Auslassluftraum angeordneter Kanal welcher als Venturi-Düse geformt ist,
- der sich von einer hinter seinem Lufteinlass liegenden Engstelle aus in Richtung seines Luftauslasses mit geringer Steigung erweitert,
- den Auslassluftraum in einen Auslassluftsammelabschnitt (13) und einen innerhalb des Kanals liegenden Kanalabschnitt (14) unterteilt und
- den Auslassluftsammelabschnitt (13) mit der Luftauslassöffnung (11) verbindet.
**dadurch gekennzeichnet, dass** im Einlassluftraum ein erster Satz Röhren (41) angeordnet ist, dessen Röhren den Einlasslufteingangsabschnitt (15) und den Einlassluftsammelabschnitt (12) verbinden.

2. Luftfilter nach Anspruch 1,
**dadurch gekennzeichnet, dass** der Lufteinlass des als Venturi-Düse ausgebildeten Kanals (50) als ein mit einer Vielzahl von Durchbrüchen (52) versehener Rohrabschnitt (51) ausgebildet ist.

3. Luftfilter nach Anspruch 1 oder 2,
**dadurch gekennzeichnet, dass** der Luftauslass des als Venturi-Düse ausgebildeten Kanals (50) als ein mit einer Vielzahl von Durchbrüchen (55) versehener Rohrabschnitt (54) ausgebildet ist.

4. Luftfilter nach einem der vorhergehenden Ansprüche,
**dadurch gekennzeichnet, dass** im Auslassluftraum ein zweiter Satz Röhren (71) angeordnet ist, dessen Röhren den Kanalabschnitt (14) mit der Luftauslassöffnung (11) verbinden.

5. Luftfilter nach Anspruch 4,
**dadurch gekennzeichnet, dass** die Röhren des zweiten Röhrensatzes (71) kürzer sind und/oder einen größeren Durchmesser aufweisen als die Röhren des ersten Röhrensatzes (41).

6. Luftfilter nach einem der Ansprüche 2, 3, 4 oder 5,
**dadurch gekennzeichnet, dass** die Durchbrüche (52) quadratische ausgebildet sind.

7. Luftfilter nach einem der vorhergehenden Ansprüche,
**dadurch gekennzeichnet, dass** Filtergehäuse (10, 20) und Filterelement (30) zylindrisch ausgebildet sind.

8. Luftfilter nach Anspruch 7,
**dadurch gekennzeichnet, dass** der als Venturidüse ausgebildete Kanal (50) und der im Einlassluftraum angeordnete erste Satz Röhren (41) und/oder der im Auslassluftraum angeordnete zweite Satz Röhren (71) achsparallel zur Mittelachse (35) des Filterelements ausgerichtet sind.

9. Luftfilter nach Anspruch 7 oder 8,
**dadurch gekennzeichnet, dass** die Röhren des ersten Röhrensatzes (41) auf ihrer Lufteinlassseite an einem tellerförmig ausgebildeten Tragkörper befestigt sind, der den Durchtritt von zu reinigender Luft zum Filterelement (30) bis auf den Durchtrittsquerschnitt aller Röhren, des ersten Röhrensatzes (41) sperrt.

10. Luftfilter nach Anspruch 8,
**dadurch gekennzeichnet, dass** der tellerförmig ausgebildete Tragkörper (40) in seinem inneren Durchmesserbereich eine zum Einlasslufteingangsabschnitt (15) ausgeformte Wölbung aufweist.

11. Luftfilter nach einem der vorhergehenden Ansprüche,
**dadurch gekennzeichnet, dass** der als Venturidüse ausgebildete Kanal (50) innerhalb des Filterelements (30) liegt und der erste Satz Röhren (41) nahe der äußeren Umfangsfläche Filterelements (30) angeordnet sind.

12. Luftfilter nach einem der vorhergehenden Ansprüche,
**dadurch gekennzeichnet, dass** die Lufteinlassöffnung (21), der Einlasslufteingangsabschnitt (15), der erste Satz Röhren (41), der Einlassluftsammelabschnitt (12), das Filterelement (30), der Auslassluftsammelabschnitt (13), der Kanalabschnitt (14) und die Luftauslassöffnung (11) funktional aufeinanderfolgend im Luftfilter angeordnet sind, so dass die Strömungsrichtung der Luft sich beim Passieren der Abschnitte mehrfach ändert.

13. Luftfilter nach Anspruch 12,
**dadurch gekennzeichnet, dass** zusätzliche das Rohrstück (60), der Auslassluftvorröhrenabschnitt (73), der zweite Satz Röhren (71) und der Auslassluftausgangsabschnitt (74) funktional aufeinanderfolgendend dem Luftfilter angeordnet sind, so dass die Strömungsrichtung der Luft sich beim Passieren der Abschnitt mehrfach ändert.

14. Luftfilter nach einem der vorhergehenden Ansprüche,
**dadurch gekennzeichnet, dass** die Röhren des ersten Röhrensatzes (41) und/oder des zweiten Röhrensatzes (71) in Luftströmungsrichtung konisch zulaufen.

15. Luftfilter nach einem der vorhergehenden Ansprüche,
**dadurch gekennzeichnet, dass** zur Geräuschminimierung die Anzahl, die Länge und der Durchmesser der Röhren des ersten Röhrensatzes (41) und/oder des zweiten Röhrensatzes (71) in Abhängigkeit der Schallcharakteristik des Verbrennungsmotors festgelegt sind.

## Claims

1. Air filter for internal combustion engines, comprising
- a filter housing which comprises a housing body (10) and a housing cap (20) and which has an air inlet opening (21) and an air outlet opening (11),
- a filter element (30) which is arranged inside the filter housing and which divides the latter into an inlet air-chamber, which comprises an entry portion (15) for incoming air and a collecting portion (12) for incoming air, and an outlet air-chamber (13, 14),
- a passage arranged in the outlet air-chamber which is shaped to form a venturi tube,
- which widens at a shallow gradient from a throat, situated downstream of its air inlet, towards its air outlet,
- divides the outlet air-chamber into a collecting portion (13) for outgoing air and a passage portion (14) situated inside the passage, and
- connects the collecting portion (13) for outgoing air to the air outlet opening (11)
**characterised in that** there is arranged in the inlet air-chamber a first set of tubes (41) of which the tubes connect the inlet portion (15) for incoming air and the collecting portion (12) for incoming air.

2. Air filter according to Claim 1, **characterised in that** the air inlet of the passage (50) formed as a venturi tube is in the form of a tubular portion (51) provided with a plurality of apertures (52).

3. Air filter according to Claim 1 or 2, **characterised in that** the air outlet of the passage (50) formed as a venturi tube is in the form of a tubular portion (54) provided with a plurality of apertures (55).

4. Air filter according to any one of the foregoing claims, **characterised in that** there is arranged in the outlet air-chamber a second set of tubes (71) of which the tubes connect the passage portion (14) to the air outlet opening (11).

5. Air filter according to Claim 4, **characterised in that** the tubes in the second set of tubes (71) are shorter and/or of larger diameter than the tubes in the first set of tubes (41).

6. Air filter according to any one of Claims 2, 3, 4 or 5, **characterised in that** the apertures (52) are of a square form.

7. Air filter according to any one of the foregoing claims, **characterised in that** the filter housing (10, 20) and filter element (30) are of a cylindrical form.

8. Air filter according to Claim 7, **characterised in that** the passage (50) formed as a venturi tube, the first set of tubes (41) arranged in the inlet air-chamber and/or the second set of tubes (71) arranged in the outlet air-chamber are aligned with their axes parallel to the centre axis (35) of the filter element.

9. Air filter according to Claim 7 or 8, **characterised in that** the tubes in the first set of tubes (41) are fastened, at their air-inlet ends, to a supporting body of dish-like form which blocks the passage of air to be cleaned to the filter element (30) except over the cross-section for passage through all the tubes belonging to the first set of tubes (41).

10. Air filter according to Claim 8, **characterised in that**, in the region of its inside diameter, the supporting body of dish-like form (40) has a convexity which is shaped to protrude into the inlet portion (15) for incoming air.

11. Air filter according to any one of the foregoing claims, **characterised in that** the passage (50) which is formed as a venturi tube is situated inside the filter element (30) and the first set of tubes (41) are arranged close to the outer circumferential surface of the filter element (30).

12. Air filter according to any one of the foregoing claims, **characterised in that** the air inlet opening (21), the inlet portion (15) for incoming air, the first set of tubes (41), the collecting portion (12) for incoming air, the filter element (30), the collecting portion (13) for outgoing air, the passage portion (14) and the air outlet opening (11) are arranged in functional succession in the air filter, so that the direction of flow of the air changes a number of times as it passes through the sections.

13. Air filter according to Claim 12, **characterised in that** the length of tube (60), the upstream-of-tubes portion (73) for outgoing air, the second set of tubes (71), and the outlet portion (74) for outgoing air are, in addition, arranged in functional succession to the air filter, so that the direction of flow of the air changes a number of times as its passes through the sections.

14. Air filter according to any one of the foregoing claims, **characterised in that** the tubes in the first set of tubes (41) and/or the tubes in the second set of tubes (71) taper in a conical shape in the direction of flow of the air.

15. Air filter according to any one of the foregoing claims, **characterised in that**, to minimise noise, the quantity, length and diameter of the tubes in the first set of tubes (41) and/or the second set of tubes (71) are decided as a function of the acoustic characteristic of the internal combustion engine.

## Revendications

1. Filtre à air pour moteur à combustion interne, comprenant :
- un boîtier de filtre, comprenant un corps de boîtier (10) et un couvercle de boîtier (20), avec une ouverture d'entrée d'air (21) et une ouverture de sortie d'air (11),
- un élément de filtre (30) qui est agencé à l'intérieur du boîtier de filtre et subdivise celui-ci en un espace d'air admis, comprenant une section d'entrée d'air admis (15) et une section de collecte d'air admis (12), et en un espace d'air sortant (13, 14),
- un canal agencé dans l'espace d'air sortant et qui est formé en tuyère de Venturi, qui
-- partant d'un emplacement rétréci situé derrière son entrée d'air, va en s'élargissant en direction de sa sortie d'air sous une faible pente,
-- subdivise l'espace d'air sortant en une section de collecte d'air sortant (13) et une section de canal (14) située à l'intérieur du canal, et
-- relie la section de collecte d'air sortant (13) à l'ouverture de sortie d'air (11),
**caractérisé en ce que** dans l'espace d'air admis est agencé un premier groupe de tubes (41) dont les tubes relient la section d'entrée d'air admis (15) et la section de collecte d'air admis (12).

2. Filtre à air selon la revendication 1,
**caractérisé en ce que** l'entrée d'air du canal (50) réalisé en tuyère de Venturi est formée d'un tronçon de tube (51 ) pourvu d'une pluralité de traversées (52).

3. Filtre à air selon la revendication 1 ou 2, **caractérisé en ce que** la sortie d'air du canal (50) réalisé en tuyère de Venturi est formée d'un tronçon de tube (54) pourvu d'une pluralité de traversées (55).

4. Filtre à air selon l'une des revendications précédentes, **caractérisé en ce que** dans l'espace d'air sortant est agencé un second groupe de tubes (71) dont les tubes relient la section de canal (14) à l'ouverture de sortie d'air (11).

5. Filtre à air selon la revendication 4, **caractérisé en ce que** les tubes du second groupe de tubes (71) sont plus courts et/ou présentent un plus grand diamètre que les tubes du premier groupe de tubes (41).

6. Filtre à air selon l'une des revendications 2, 3, 4 ou 5, **caractérisé en ce que** les traversées (52) sont réalisées sous forme carrée.

7. Filtre à air selon l'une des revendications précédentes, **caractérisé en ce que** le boîtier de filtre (10, 20) et l'élément de filtre (30) sont réalisés sous forme cylindrique.

8. Filtre à air selon la revendication 7, **caractérisé en ce que** le canal (50) réalisé en tuyère de Venturi et le premier groupe de tubes (41) agencé dans l'espace d'air admis et/ou le second groupe de tubes (71) agencé dans l'espace d'air sortant sont orientés parallèlement à l'axe médian (35) de l'élément de filtre.

9. Filtre à air selon la revendication 7 ou 8, **caractérisé en ce que** les tubes du premier groupe de tubes (41) sont fixés, sur leur côté d'entrée d'air, sur un corps porteur en forme de plateau, qui bloque le passage d'air à purifier vers l'élément de filtre (20) à l'exception de la section de passage de tous les tubes du premier groupe de tubes (41).

10. Filtre à air selon la revendication 8, **caractérisé en ce que** le corps porteur en forme de plateau (40) présente dans la région de son diamètre intérieur un bombement en relief vers la section d'entrée d'air admis (15).

11. Filtre à air selon l'une des revendications précédentes, **caractérisé en ce que** le canal (50) en tuyère de Venturi est disposé à l'intérieur de l'élément de filtre (30), et le premier groupe de tubes (41) est agencé à proximité de la surface périphérique extérieure de l'élément de filtre (30).

12. Filtre à air selon l'une des revendications précédentes, **caractérisé en ce que** l'ouverture d'entrée d'air (21 ), la section d'entrée d'air admis (15), le premier groupe de tubes (41), la section de collecte d'air admis (12), l'élément de filtre (30), la section de collecte d'air sortant (13), la section de canal (14), et l'ouverture de sortie d'air (11) sont agencés de manière fonctionnelle les uns après les autres dans le filtre à air, de sorte que la direction d'écoulement de l'air se modifie plusieurs fois lors du passage de ces sections.

13. Filtre à air selon la revendication 12, **caractérisé en outre en ce que** le raccord tubulaire (60), la section de tube préliminaire pour l'air sortant (73), le second groupe de tubes (71), et la section de sortie d'air sortant (74) sont agencés de manière fonctionnelle les uns après les autres derrière le filtre à air, de sorte que la direction d'écoulement de l'air se modifie plusieurs fois lors du passage de ces sections.

14. Filtre à air selon l'une des revendications précédentes, **caractérisé en ce que** les tubes du premier groupe de tubes (41) et/ou du second groupe de tubes (71) se rétrécissent de manière conique dans la direction d'écoulement d'air.

15. Filtre à air selon l'une des revendications précédentes, **caractérisé en ce que**, pour la réduction des bruits, le nombre, la longueur et le diamètre des tubes du premier groupe de tubes (41) et/ou du second groupe de tubes (71) sont fixés en dépendance des caractéristiques acoustiques du moteur à combustion interne.
